(19) Europäisches Patentamt
European Patent Office
Office européen des brevets

(11) **EP 0 922 671 B1**

(12) **EUROPÄISCHE PATENTSCHRIFT**

(45) Veröffentlichungstag und Bekanntmachung des Hinweises auf die Patenterteilung:
**08.10.2003 Patentblatt 2003/41**

(51) Int Cl.$^7$: **C01B 33/193**, C09D 7/00, C09C 1/30, C09C 3/00

(21) Anmeldenummer: **98122230.0**

(22) Anmeldetag: **23.11.1998**

(54) **Fällungskieselsäure**

Precipitated silica

Silice de précipitation

(84) Benannte Vertragsstaaten:
**AT BE CH CY DE DK ES FI FR GB GR IE IT LI LU MC NL PT SE**

(30) Priorität: **12.12.1997 DE 19755287**

(43) Veröffentlichungstag der Anmeldung:
**16.06.1999 Patentblatt 1999/24**

(73) Patentinhaber: **Degussa AG**
**40474 Düsseldorf (DE)**

(72) Erfinder:
• **Siray, Mustafa Dr.**
  **53127 Bonn (DE)**
• **Scheffler, Jochen Dr.**
  **65755 Alzenau (DE)**

(56) Entgegenhaltungen:
**EP-A- 0 076 377     EP-A- 0 078 909**
**EP-A- 0 341 383     US-A- 4 001 379**
**US-A- 4 038 224**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine Fällungskieselsäure, ein Verfahren zu ihrer Herstellung sowie ihre Verwendung als Mattierungsmittel.

Es ist bekannt, synthetische, gefällte Kieselsäure oder Kieselgel als Mattierungsmittel einzusetzen (DE-PS 24 14 478, DE-PS 17 67 332, DE-OS 16 69 123, DE-AS 15 92 865, DE-A 38 15 670).

Das Mattierungsvermögen einer Kieselsäure hängt von verschiedenen Faktoren, wie zum Beispiel von dem Kieselsäuretyp, der Korngröße, der Korngrößenverteilung, dem Berechnungsindex und auch dem Lacksystem, ab. Von besonderer Bedeutung sind Kornform und Kornverteilung der Sekundärteilchen der Kieselsäure.

An Kieselsäuren, die als Mattierungsmittel eingesetzt werden, wird neben einer hohen Effizienz, ausgedrückt durch die Reduzierung des Glanzgrades im Vergleich zum unmattierten Lackfilm, eine Reihe weiterer Anforderungen gestellt. So soll zum Beispiel keine übermäßige Verdickung des Lacksystems durch die eingebrachte Kieselsäure erfolgen. Bei entsprechend dünnen Lackschichten soll eine glatte Lackoberfläche erhalten werden. Stippen, die die Oberflächengüte negativ beeinflussen, sollen vermieden werden.

In dem Dokument DE-A 31 44 299 werden Fällungskieselsäuren sowie ein Verfahren zur Herstellung dieser Fällungskieselsäuren, die durch die folgenden physikalisch-chemischen Kenndaten gekennzeichnet sind, beschrieben:

| | | |
|---|---|---|
| BET-Oberfläche | nach DIN 66131 m$^2$/g | 400 - 600 |
| DBP-Zahl | nach DIN 53601 % | 320 - 360 |
| und | | |
| BET-Oberfläche | nach DIN 66131 m$^2$/g | 400 - 600 |
| DBP-Zahl | nach DIN 53601 % | 310 - 360 |
| Stampfgewicht | nach DIN 53194 g/l | 75 - 120 |
| "Alpine-Siebrückstand" > 63 µm Gew.-% | | < 0,1 |

Bei der Herstellung dieser Kieselsäuren werden im Anschluß an die Sprühtrocknung für die Vermahlung eine Alpine-Querstrommühle oder eine Strahlmühle eingesetzt. In diesem Dokument wird ferner ausgeführt, daß diese Fällungskieselsäuren wertvolle, hochwirksame Mattierungsmittel für Lacke sind. Die Fällungskieselsäuren, die mit diesen Mühlentypen hergestellt werden, führen in den fertigen Lacken aufgrund starker Stippen zu einer nachteiligen Rauhigkeit der Oberfläche. Der Grindometerwert (nach ISO 1524) in schwarzem Einbrennlack beträgt bei den bekannten Fällungskieselsäuren > 100 µm bzw. 85 bis 90 µm. Somit sind diese Fällungskieselsäuren nur bedingt als Mattierungsmittel einsetzbar.

Es bestand nun die Aufgabe, eine Fällungskieselsäure, die diese Nachteile nicht aufweist, herzustellen.

Gegenstand der Erfindung ist eine Fällungskieselsäure, welche durch die folgenden physikalisch-chemischen Parameter gekennzeichnet ist:

| | |
|---|---|
| BET-Oberfläche nach DIN 66131 m$^2$/g | 400 - 600 |
| DBP-Zahl nach DIN 53601 g/100 g | 300 - 360 |
| Stampfgewicht nach DIN 53194 g/l | 70 - 140 |
| Grindometerwert nach ISO 1524 µm | 15 - 50 |
| Kornverteilungsindex I | < 1,0 |
| gemessen mit Malvern | |
| Kornverteilungsindex I $= \dfrac{d_{90} - d_{10}}{2 d_{50}}$ | |

Ein weiterer Gegenstand der Erfindung ist ein Verfahren zur Herstellung der erfindungsgemäßen Fällungskieselsäure mit den physikalisch-chemischen Parametern

| | |
|---|---|
| BET-Oberfläche nach DIN 66131 m$^2$/g | 400 - 600 |
| DBP-Zahl nach DIN 53601 g/100 g | 300 - 360 |
| Stampfgewicht nach DIN 53194 g/l | 70 - 140 |
| Grindometerwert nach ISO 1524 µm | 15 - 50 |
| Kornverteilungsindex I | < 1,0 |

(fortgesetzt)

| gemessen mit Malvern | |
|---|---|
| Kornverteilungsindex I = $\dfrac{d_{90}-d_{10}}{2d_{50},}$ | |

welches dadurch gekennzeichnet ist, daß man eine Fällungskieselsäure, welche die folgenden physikalisch-chemischen Kenndaten

| BET-Oberfläche nach DIN 66131 $m^2$/g | 400 - 600 |
|---|---|
| DBP-Zahl nach DIN 53601 g/100 g | 340 - 380 |
| Stampfgewicht nach DIN 53194 g/l | 180 - 220 |
| "Alpine-Siebrückstand" > 63 µm Gew.-% | 25 - 60 |

aufweist, mittels einer Sichtermühle oder einer Fließbett-Gegenstrahlmühle vermahlt.

Die Ausgangskieselsäure wird in dem Dokument DE-A 31 44 299 beschrieben.

Diese Fällungskieselsäuren werden hergestellt, indem man in eine auf 40 - 42 °C erwärmte Vorlage aus Wasser unter Konstanthaltung eines pH-Wertes im Bereich von 6 - 7 durch gleichzeitigen Zulauf von Wässerglaslösung und Schwefelsäure, unter anhaltendem Scheren mit einer Ekato-Turbine über die gesamte Fällzeit, durch 90minütige Unterbrechung der Fällung.von der 13. bis zur 103. Minute nach einer Gesamtfälldauer von 146 Minuten eine Kieselsäureendkonzentration von 46 g/l einstellt, die Fällungskieselsäuresuspension 12 -17 Stunden lang altert, die Fällungskieselsäure mit Hilfe einer Filterpresse aus der Suspension abtrennt, auswäscht, der Filterkuchen mit Wasser und/oder Säure zu einer Suspension mit 10-16 Gew.-% Feststoffgehalt verflüssigt, anschließend sprühtrocknet, und entweder gar nicht oder mit einer Querstrommühle oder Strahlmühle vermahlt.

In einer beispielhaften Ausführungsform der Erfindung kann man eine Sichtermühle ZPS (Zirkoplex® Alpine Aktiengesellschaft D-8900 Augsburg) bzw. eine Fließbett-Gegenstrahlmühle AFG einsetzen.

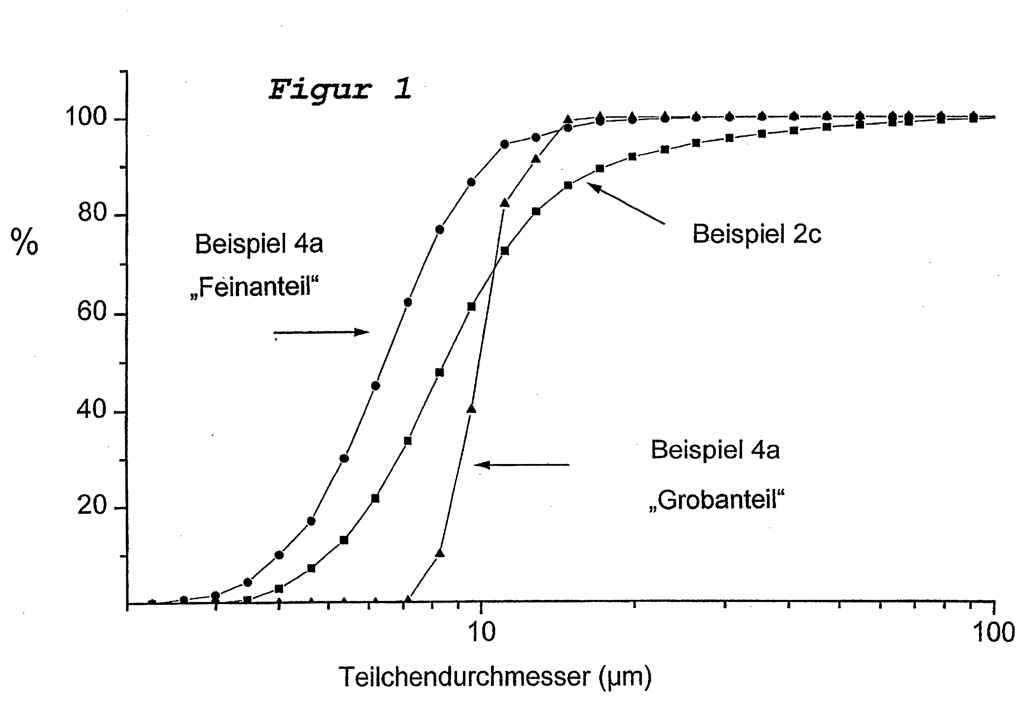

In einer weiteren Ausgestaltung der Erfindung kann die erfindungsgemäße Fällungskieselsäure nach dem Vermahlen gesichtet werden, um eine bestimmte Kornfraktion einzustellen. In einer bevorzugten Ausführungsform der Erfindung kann die Fällungskieselsäure die Korngrößenverteilung gemäß Figur 1 aufweisen.

Die Sichtung kann man beispielsweise mit einem Turboplex-Feinstsichter ATP (Alpine Aktiengesellschaft D-8900 Augsburg) durchführen.

Die erfindungsgemäße Fällungskieselsäure weist die folgenden Vorteile auf:

Die Vorteile der erfindungsgemäßen Fällungskieselsäure liegen insbesondere in ihrer hohen Mattierungseffizienz, neben weiterer Vorteile wie hohe Oberflächenglätte des trockenen Lackes, hohe Transparenz und geringe Beeinflussung der Rheologie (Viskosität) des Lackes.

Figur 1 zeigt die Kornverteilung der gesichteten Fällungskieselsäure.

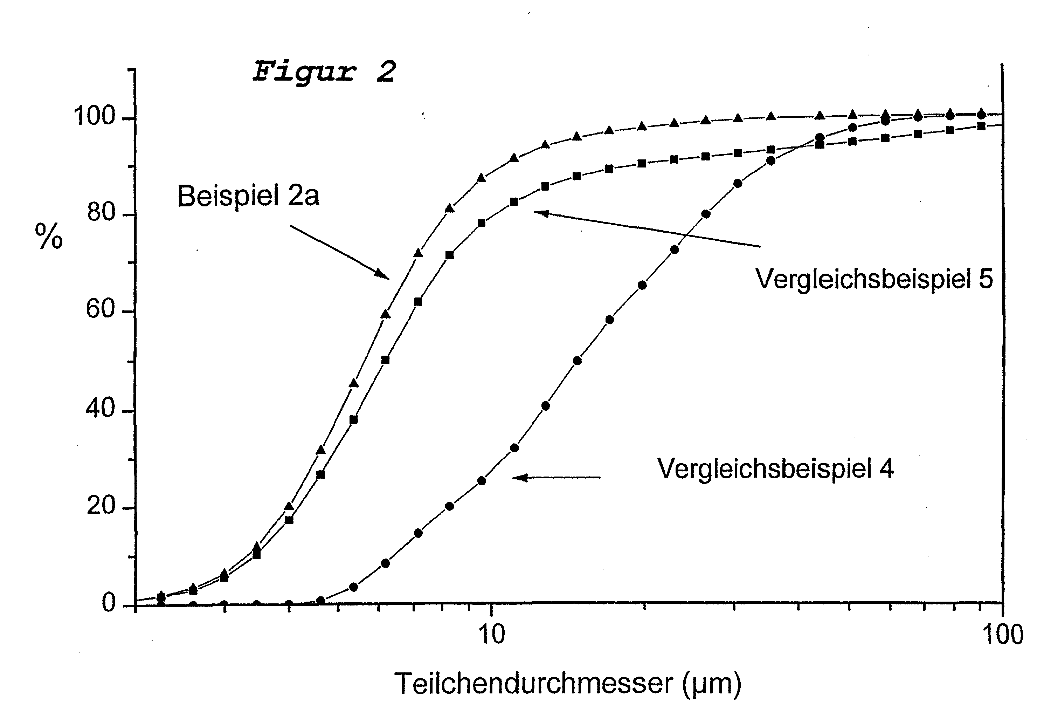

Figur 2 zeigt die Kornverteilung der erfindungsgemäßen Fällungskieselsäure im Vergleich zu der Kornverteilung einer Fällungskieselsäure gemäß DE-A 31 44 299.

Beispiele

Beispiel 1

Die folgenden Beispiele beziehen sich auf Beispiel 1 aus DE 3144299. Hier wird in einem 75 $m^3$-Holzbottich, der als Fällbehälter dient und der mit einem MIG-Balkenrührwerk und einer Ekato-Scherturbine ausgerüstet ist, 60 $m^3$ Wasser mit einer Temperatur von 40 °C vorgelegt. In diese Vorlage fließen gleichzeitig mit einer Geschwindigkeit von 9,8 $m^3$/h handelsübliches Wasserglas ($SiO_2$. 26,8 Gew.-% $Na_2O$ : 8,0 Gew.-%, Modul = 3,35) und konzentrierte Schwefelsäure (96 %ig) mit einer Geschwindigkeit von 0,98 $m^3$/h ein. Dabei wird die Säure über die Turbine zugesetzt, die mit Fällungsbeginn in Betrieb gesetzt wird. Während dieser Zugabe wird der pH-Wert der Fällvorlage bei 6,0 gehalten. Nach der 13. Fällminute - d.h. bei sich abzeichnendem Viskositätsanstieg - wird die Zugabe von Wasserglas und Säure für die Dauer von 90 Minuten lang unterbrochen. Während dieser Unterbrechungsphase wird weiter mit der Ekaturbine geschert. Ab der 103. Minute wird die Zugabe von Wasserglas unter Einhalten der obengenannten Zugabegeschwindigkeiten und des pH-Wertes bis zur 146. Minute fortgesetzt Der Feststoffgehalt der Fällungssuspension liegt dann bei 46 g/l. Die Temperatur kann je nach äußeren Temperaturbedingungen einen Wert von 42 - 49 °C angenommen haben. Der End-pH-Wert liegt bei 6,0. Insgesamt werden 9,1 m$^3$ Wasserglas und 0,91 m$^3$ Schwefelsäure umgesetzt. Die Suspension wird in einem Zwischenbehälter vor dem Abpressen 15 Stunden lang gealtert. Im Anschluß an diese Alterungsphase wird die Suspension mittels 4 Filterpressen filtriert. Dabei beträgt die Füllzeit bei einem Enddruck von 3,3 bar 1 Stunde. Nach einer sehr kurzen Waschzeit von nur 1,5 Stunden stellt sich ein Leitfähigkeitswert des abfließenden Filtrats von 1050 µS ein, nach 4 Stunden Waschzeit ein solcher von 280 µS. Der Feststoffgehalt des erhaltenen Filterkuchens liegt bei 16,5 - 17 Gew.-%. Er wird mit Wasser unter Einwirkung von Scherkräften verflüssigt und weist danach einen Feststoffgehalt von 11 Gew.-% auf. Im Anschluß an die Verflüssigung wird die Kieselsäuresuspension mittels einer rotierenden Scheibe zerstäubt und mit heißen Verbrennungsgasen getrocknet.

Eine Fällungskieselsäure, hergestellt nach Beispiel 1 von DE 31 44 299, wird unter Variation des Durchsatzes und der Prozeßparameter, wie Sichterdrehzahl, Mühlendurchsatz oder Mahlluft, in einer Zirkoplex® Sichtermühle ZPS 100, Fa. Alpine, vermahlen. Die Versuchsparameter, die physikalisch-chemischen Daten und die lacktechnischen Ergebnisse, die in schwarzem Einbrennlack erhalten werden, sind in Tabelle 1 aufgeführt.

Beispiel 2:

Eine Fällungskieselsäure, hergestellt nach Beispiel 1 von DE 31 44 299, wird unter Variation des Durchsatzes und der Prozeßparameter, wie Sichtdrehzahl oder Mahlluft, in einer Fließbett-Gegenstrahlmühle AFG 200/1, Fa. Alpine, vermahlen. Die Versuchsparameter, die physikalisch-chemischen Daten und die lacktechnischen Ergebnisse, die in schwarzem Einbrennlack erhalten werden, sind in Tabelle 2 aufgeführt.

Beispiel 3:

Fällungskieselsäuren, die gemäß Beispiel 1c bzw. Beispiel 2c (siehe Tabelle 1 und Tabelle 2) hergestellt werden, werden in einem Turboflex-Feinsichter ATP 50 in eine feinere und gröbere Fraktion gesichtet. Die Prozeßgrößen, die physikalischen Daten und die lacktechnischen Untersuchungsergebnisse, die in schwarzem Einbrennlack ermittelt werden, sind in Tabelle 3 aufgeführt.

Beispiel 4 (Vergleichsbeispiel):

Die unvermahlene, sprühgetrocknete Kieselsäure, hergestellt nach DE 31 44 299 gemäß Beispiel 6, wird auf einer Alpine-Querstrommühle vom Typ UP 630 vermahlen. Dies entspricht Beispiel 1, geändert wird nur die Alterungszeit von 15 auf 17 Stunden. Des weiteren wird der Filterkuchen mit wenig verdünnter Schwefelsäure und wenig Wasser verflüssigt und die anfallende Suspension mit einem Feststoff von 16 Gew.-% zur Sprühtrocknung gebracht. Die im Feststoff enthaltene freie Säure wird durch Ammoniakgas neutralisiert. Die physikalisch-chemischen und die lacktechnischen Daten des erhaltenen Produktes sind in Tabelle 4 aufgeführt.

Beispiel 5 (Vergleichsbeispiel):

Die unvermahlene, sprühgetrocknete Kieselsäure, hergestellt nach DE 31 44 299 gemäß Beispiel 9, wird mittels einer Luftstrahlmühle vom Typ Microgrinding MC 500 vermahlen. Die physikalisch-chemischen und lacktechnischen Daten sind in der Tabelle 4 aufgeführt.

Die Wirksamkeit bzw. Mattierungseffizienz der nach Beispiel 1 - 3 hergestellten Fällungskieselsäuren wird in einem schwarzen Einbrennlack untersucht. Beurteilt werden neben dem Glanzgrad nach Lange bei einem Reflexionswinkel von 60° bzw. 85° der Grindometerwert nach Hegman.

Für die Bestimmung des Glanzgrades, der ein Maß für die Mattierkraft der geprüften Mattierungskieselsäure ist, wird der Glanzmesser nach B. Lange benutzt. Der Glanzmesser nach B. Lange benutzt als Einfalls- und Reflexionswinkel einen solchen von 60° beziehungsweise 85°. Die gemessenen Glanzgrade werden in Prozenten angegeben. Je niedriger dieser Wert ausfällt, desto besser ist das Mattierunsgvermögen der Fällungskieselsäure. Folglich muß weniger Mattierungsmittel angewandt werden, um einen ganz bestimmen Glanzgrad bzw. eine bestimmte gute Mattierungswirkung zu erreichen.

Die Bestimmung des Grindometerwertes erfolgt mit Hilfe eines Grindometers. Der Grindometerwert, der in µm (Mikrometer) gemessen wird, ist ein Maß für die größten Teilchen, die sich nach dem Einrühren der Fällungskieselsäure in der fertigen, spritzbaren Lackmischung befinden. Er läßt sich zu der Stippenbildung in dem trockenen Lackfilm in Beziehung setzen, so daß mit

Hilfe des Grindometers die unerwünschten Stippen oder das Spritzkorn erkannt werden können (ISO 1524).

Die Beschaffenheit der Lackfilmoberfläche wird nach Tastschnittverfahren der Firma Hommelwerke bestimmt und als Mittenrauhwert (Ra) nach DIN 4768/1, DIN 4762/1E und als gemittelte Rautiefe (RZD) nach DIN 4768/1 angegeben.

Der verwendete schwarze Einbrennlack hat folgende Zusammensetzung:

| | Gew. Teile |
|---|---|
| Rußpaste Tack 1 | 8,0 |
| Jägalyd R40, 60 %ig in Xylol | 50,8 |
| Maprenal MF 800, 55 %ig in Butanol | 25,9 |
| Baysilone-Lackadditiv OL 17,1 %ig in Xylol | 2,0 |
| Verdünnung | 13,3 |
| | 100,0 |
| Verdünnung | |
| Xylol | 75,0 |
| Butanol | 10,0 |
| Ethoxypropanol | 15,0 |
| | 100,0 |

Es werden 4 g Fällungskieselsäure auf 100 g Lack mit einem Flügelrührer bei 2000 UpM 10 Minuten lang eingerührt. Die Viskosität der Mischung wird mit Xylol auf eine Auslaufzeit von 20 sec. eingestellt (DIN; 4 mm Düse).

Der Lack wird in einer ca. 30 μm starken Trockenschicht auf Bleche aufgespritzt, luftgetrocknet und bei 180 °C 30 Minuten eingebrannt.

Beispiel 6:

Es werden die anwendungstechnischen Eigenschaften der nach Beispiel 1a - c hergestellten Fällungskieselsäuren, einer Fällungskieselsäure, hergestellt nach DE 38 15 670, sowie eines im Handel erhältlichen Produkts (Nipsil 1009) in zwei weiteren Testlacksystemen untersucht.

CC-Lack

| CC-Lack | |
|---|---|
| | Gew.-Teile |
| Alftalat AN 950, 60% in Solvesso 150/Butylglykol | 29,30 |
| Solvesso 150 | 2,60 |
| Titandioxid Kronos 2059 | 33,60 |
| Aerosil R 972 | 0,20 |
| Dispergierung: 40 h Kugelmühle KU 5, 60 U/min, 4900 g Alubitkugeln 19 mm | |
| Alftalat AN 950, 60 % in Solvesso 150/Butylglykol | 13,00 |
| Maprenal MF 900, 100 % | 8,10 |
| Maprenal MF 577, 50 % in Butanol | 0,80 |
| Butylglykol | 2,00 |
| Solvesso 150 | 2,90 |
| Xylol | 6,70 |
| DOW CORNING PA 57 | 0,60 |
| p-Toluolsulfonsäure, 20 % in Butanol | 0,30 |
| Gesamt | 100,00 |

Vor der Anwendung werden in 150 Gew.-Teilen Lack 3,2 g Mattierungsmittel mit einem Flügelrührer bei 2000 U/min dispergiert.

DD-Lack

| DD-Lack | |
|---|---|
| | Gew.-Teile |
| CAB 381-0,5 | 0,3 |
| Butylacetat, 98 %ig | 11,0 |
| Ethoxypropylacetat | 16,5 |
| Desmophen 800 | 15,0 |
| Desmophen 1100 | 20,0 |
| Mowilit, 50 %ig in Ethylacetat | 3,0 |
| Baysilone-Lackadditiv | 0,1 |
| Xylol | 34,1 |
| Gesamt | 100,00 |

Es werden zunächst 0,3 Gew.-Teile CAB 381-0,5 bei vorsichtiger Dosierung in 11,0 Gew.-Teile Butylacetat 98 %ig und 16,5 Gew.-Teile Ethoxypropylacetat mit dem Schnellrührer gelöst. Danach werden in der angegebenen Reihenfolge die weiteren Komponente hinzugefügt und durch Rühren homogenisiert.

Vor Verwendung wird der Glanzlack mit dem Flügelrührer homogenisiert. In 100 Gew.-Teilen Lack wird das Mattierungsmittel (Menge s. Tabelle 6) mit einem Flügelrührer bei 2000 U/min dispergiert. Nach einer Entlüftungszeit von 15 min werden 50 g des Härters Desmodur L 75 zugegeben und mit dem Flügelrührer 2 min bei 1000 U/min homogenisiert. Die Mischung wird mit einem Rakel, 200 Mikrometer Spaltbreite, auf eine vorher einwandfrei gereinigte Glastafel sowie eine schwarze, hochglänzend lackierte Glastafel appliziert.

Die Untersuchungsergebnisse in CC-Lack sind in Tabelle 5 und DD-Lack in Tabelle 6 aufgeführt. Zum Vergleich werden die Fällungskieselsäuren nach DE 38 15 670 und Verkaufsprodukt NIPSIL E 1009 herangezogen. Die Gegenüberstellung der ermittelten Daten ist den Tabellen zu entnehmen.

Tabelle 1

| Bsp. | Mühlen-drehzahl | Sichter-dreh-zahl | Sicht-luft | Dosie-rung | Teilchengröße (Malvern) | | | | Grindo | Glanz | | Sheen | Rauheit | | Viskosität | Schichtdicke |
|---|---|---|---|---|---|---|---|---|---|---|---|---|---|---|---|---|
| | U/min | U/min | m³/h | kg/h | d 4,3 | d 10 | d 50 | d 90 | µm | 60° | 85° | | RZD | Ra | s | µm |
| 1 a | 10700 | 11000 | 175 | 10 | 8,34 | 4,48 | 7,03 | 12,89 | 23 | 23,8 | 72,0 | 48,2 | 2,27 | 0,27 | 36 | 30 |
| 1 b | 10000 | 10500 | 180 | 15 | 9,76 | 4,53 | 7,11 | 15,84 | 27 | 21,8 | 70,3 | 48,5 | 2,37 | 0,28 | 36 | 30 |
| 1 c | 10000 | 9000 | 200 | 30 | 9,34 | 4,52 | 8,03 | 13,87 | 28 | 24,7 | 67,9 | 43,2 | | | 34 | 28 |
| 1 d | 10000 | 10000 | 145 | 15 | 9,97 | 4,27 | 6,78 | 16,13 | 33 | 26,0 | 73,4 | 47,4 | | | 38 | 29 |

Tabelle 2

| Bsp. | Sichter-dreh-zahl | Mahl-luft | Dosie-rung | Teilchengröße (Malvern) Mikrometer (µm) | | | | Grindo | Glanz | | Sheen | Rauheit | | Viskosität | Schichtdicke |
|---|---|---|---|---|---|---|---|---|---|---|---|---|---|---|---|
| | U/min | m³/h | kg/h | d 4,3 | d 10 | d 50 | d 90 | µm | 60° | 85° | | RZD | Ra | s | µm |
| 2 a | 11000 | 150 | 20 | 6,49 | 3,74 | 5,95 | 9,7 | 23 | 16,6 | 66,4 | 49,8 | 2,24 | 0,28 | 36 | 40 |
| 2 b | 11000 | 150 | 40 | 12,9 | 3,69 | 6,68 | 24,3 | 23 | 21,9 | 58,0 | 36,1 | 2,00 | 0,24 | 39 | 39 |
| 2 c | 10000 | 150 | 20 | 11,5 | 4,99 | 8,47 | 17,9 | 27 | 16,6 | 58,8 | 42,2 | 3,24 | 0,42 | | |
| 2 d | 8000 | 150 | 30 | 12,2 | 5,76 | 11,5 | 19,5 | 39 | 15,6 | 43,8 | 28,2 | 4,30 | 0,55 | 36 | 42 |
| 2 e | 11000 | 150 | 30 | 7,6 | 3,55 | 6,1 | 12,44 | 24 | 21,1 | 55,4 | 34,3 | | | | |

EP 0 922 671 B1

Tabelle 3

Sichtung von Fällungskieselsäuren, hergestellt nach Beispiel 1c

| Bsp. | Fraktion | Dreh-zahl | Sicht-luft | Dosie-rung | Teilchengröße (Malvern) | | | | Grindo | Glanz | | Sheen | Rauheit | | Viskosität | Schichtdicke |
|------|----------|-----------|------------|------------|------|------|------|------|--------|------|------|-------|-----|-----|------------|--------------|
| | | U/min | m³/h | kg/h | d 4,3 | d 10 | d 50 | d 90 | µm | 60° | 85° | | RZD | Ra | s | µm |
| 3 a | fein | 16000 | 53 | 4,3 | 7,42 | 4,24 | 6,78 | 11,13 | 22 | 25,3 | 75,7 | 50,4 | | | 23 | 30 |
| | grob | | | | 12,07 | 8,05 | 11,28 | 16,99 | 33 | 12,1 | 27,6 | 15,5 | | | 21 | 30 |
| 3 b | fein | 16000 | 66 | 2,0 | 6,84 | 3,95 | 6,30 | 10,11 | 23 | 26,2 | 74,9 | 48,7 | | | 23 | 30 |
| | grob | | | | 11,18 | 8,26 | 10,93 | 14,45 | 33 | 12,3 | 26,4 | 14,1 | | | 21 | 30 |
| 3 c | fein | 13000 | 117 | 6,0 | 7,42 | 4,24 | 6,82 | 11,07 | 22 | 23,1 | 71,9 | 48,8 | 2,13 | 0,26 | 23 | 30 |
| | grob | | | | 11,08 | 8,03 | 10,73 | 14,48 | 33 | 13,9 | 35,6 | 21,7 | | | 21 | 30 |

Sichtung von Fällungskieselsäuren, hergestellt nach Beispiel 2c

| Bsp. | Frak-tion | Aus-beute | Sichter-dreh-zahl | Mahl-luft | Dosie-rung | Teilchengröße (Malvern) | | | | Grindo | Glanz | | Sheen | Rauheit | | Viskosität |
|------|-----------|-----------|-------------------|-----------|------------|------|------|------|------|--------|------|------|-------|-----|-----|------------|
| | | % | U/min | m³/h | kg/h | d 4,3 | d 10 | d 50 | d 90 | µm | 60° | 85° | | RZD | Ra | s |
| 4 a | fein | 85 | 13000 | | 2,1 | 6,84 | 3,95 | 6,26 | 10,10 | 29 | 19,8 | 70,3 | 50,7 | 2,2 | 0,27 | 26 |
| | grob | 15 | | | | 10,17 | 8,32 | 9,91 | 12,35 | 29 | 10,9 | 31,2 | 20,3 | | | 24 |
| 4 b | fein | 66 | 16000 | | 2,1 | 7,37 | 3,01 | 4,84 | 11,08 | 17 | 21,8 | 77,6 | 55,8 | | | 26 |
| | grob | 34 | | | | 9,36 | 8,45 | 9,28 | 10,4 | 27 | 10,5 | 36,2 | 25,7 | | | 24 |

EP 0 922 671 B1

Tabelle 4

| | Teilchengröße (µm) | | | | Grindo | Glanz | | Sheen |
|---|---|---|---|---|---|---|---|---|
| | d 4,3 | d 10 | d 50 | d 90 | µm | 60° | 85° | |
| Vergleichsbeispiel 4 | 18,7 | 6,4 | 14,9 | 35,1 | > 100 | 10,5 | 15,2 | 4,7 |
| Vergleichsbeispiel 5 | 12,8 | 3,4 | 6,2 | 20,7 | 85 Stippen, Luftblasen | 18,4 | 62,4 | 44,0 |

Tabelle 5

CC-Lack

| Beispiel nach: | DE 38 15 670 | 1 a | 1 b | 1 c | NIPSIL E 1009 |
|---|---|---|---|---|---|
| Auslaufzeit in DIN-Sekunden bei 23 °C | 140 | 149 | 148 | 135 | 118 |
| Schichtdicke in µm | 23 | 23 | 24 | 23 | 23 |
| 60°-Reflektometerwert nach DIN 67530 | 36,9 | 36,7 | 36,3 | 37,7 | 44,4 |
| 85°-Reflektometerwert nach DIN 67530 | 79,3 | 78,9 | 77,7 | 77,5 | 86,5 |
| Sheen | 42,4 | 42,2 | 41,4 | 39,8 | 42,1 |

EP 0 922 671 B1

Tabelle 6

DD-Lack

| Beispiel nach: | DE 38 15 670 | 1 a | 1 b | 1 c | NIPSIL E 1009 |
|---|---|---|---|---|---|
| Zugabemenge Mattierungsmittel | 7,5 | 7,5 | 7,5 | 7,5 | 7,5 |
| Auslaufzeit in DIN-Sekunden bei 23 °C | 31 | 42 | 41 | 32 | 23 |
| 60°-Reflektometerwert nach DIN 67530 | 19,5 | 30 | 30,2 | 43,7 | 90,4 |
| 85°-Reflektometerwert nach DIN 67530 | 55,6 | 68,1 | 68,2 | 74,9 | 97,5 |
| Densitonmeterwert Macbeth RD 918 gemessen mit Gelbfilter | 2,12 | 2,31 | 2,17 | 2,16 | 2,3 |

EP 0 922 671 B1

Beispiel 7:

Die Mattierungseffizienz wird in verschiedenen Lacksystemen ermittelt, wobei die Herstellung und Applikation des Lackes unter jeweils gleichen Bedingungen erfolgt.

Eine hohe Mattierungseffizienz bedeutet einen geringen Bedarf (Konzentration) an Mattierungsmittel, um einen bestimmten Glanzgrad (gemessen im Winkel von 60 °C) zu erzielen. Die Ermittlung der Mattierungseffizienz von unbekannten Mattierungsmitteln erfolgt relativ, d. h. im Vergleich zu bekannten Mattierungsmitteln, so daß Schwankungen in der Glanzgradbestimmung (bedingt durch die Herstellung und Applikation der Lacke) umgangen werden. Ein wichtiger physikalisch-chemischer Parameter, der die Mattierungseffizienz der Kieselsäure entscheidend beeinflußt, ist die Korngrößenverteilung der Kieselsäure. Grundsätzlich gilt, daß bei gleichem Fällverfahren die Mattierungseffizienz der Fällungskieselsäure mit abnehmender Teilchengröße abnimmt (und umgekehrt). Feinfraktionen von gefällten Kieselsäuren weisen eine geringere Mattierungseffizienz auf als eine grobteiligere Mahlfraktion.

Die hohe Mattierungseffizienz der erfindungsgemäßen Fällungskieselsäure wird wie folgt in verschiedenen Lacksystemen festgestellt:

Tabelle 7: Prüfung im Alkyd/Melamin-Lack

Lacksystem: Alkyd Melamin gemäß Rezeptur
Produkt aus Beispiel 2c zeigt eine höhere Mattierungseffizienz als Syloid ED 5, obwohl dieses
Produkt feinteiliger ist. Weiterhin ist Produkt 2a effizienter als Nipsil E 1009 und Syloid ED 3.

| Produkt hergestellt nach Beispiel | MM-Ein-waage | Teil-chen-größe d4,3 | Tei-chen-größe d10 | Teil-chen-größe d50 | Teil-chen-größe d90 | Grin-dome-ter | Glanz 60° | Glanz 85° | Sheen | Rau-heit RZD (A/M) | Rau-heit Ra (A/M) | Visko-sität | Schicht-dicke |
|---|---|---|---|---|---|---|---|---|---|---|---|---|---|
| | g | | µm | µm | µm | µm | | | | | | s | µm |
| | | | | | | | | | | | | | |
| 1 + 3 | 4 | 12,32 | 6,58 | 11,48 | 18,83 | 32 | 16,0 | 43,0 | 27,0 | 3,43 | 0,46 | 34 | 32 |
| 1 + 3 | 4 | 11,85 | 5,99 | 10,90 | 18,70 | 34 | 16,0 | 46,0 | 30 | | | 37 | 32 |
| 2 | 4 | 12,22 | 5,76 | 11,53 | 19,50 | 40 | 16,4 | 45,0 | 28,6 | 4,30 | 0,55 | 36 | 42 |
| OK 520 | 4 | | | 7,20 | | 31 | 16,5 | 64,0 | 47,5 | 3,05 | 0,36 | 38 | 37 |
| 2 | 4 | 11,50 | 4,99 | 8,47 | 17,97 | 30 | 16,6 | 56,8 | 40,2 | 3,24 | 0,42 | 36 | 38 |
| 2 | 4 | 10,90 | 5,55 | 10,41 | 16,46 | 37 | 16,9 | 47,8 | 30,9 | | | 38 | 27 |
| 1 | 4 | 13,24 | 6,42 | 12,90 | 20,40 | 33 | 17,8 | 43,6 | 25,8 | | | 36 | 30 |
| 1 + 3 | 4 | 12,32 | 6,58 | 11,48 | 18,83 | 33 | 17,9 | 50,2 | 32,3 | 3,43 | 0,46 | 33 | 40 |
| Syloid ED 5 | 4 | 10,47 | 6,30 | 9,56 | 16,82 | 32 | 18,7 | 51,0 | 32,3 | 3,65 | 0,46 | 32 | 41 |
| 1 + 3 | 4 | 8,85 | 4,50 | 8,37 | 13,19 | 25 | 19,8 | 61,9 | 42,1 | 2,80 | 0,35 | 37 | 32 |
| 1 + 3 | 4 | 8,85 | 4,50 | 8,37 | 13,19 | 25 | 21,0 | 63,0 | 42,0 | | | 34 | 40 |
| 1 | 4 | 11,37 | 5,81 | 10,95 | 17,12 | 34 | 21,5 | 55,2 | 33,7 | | | 35 | 28 |
| 1 | 4 | | | 7,10 | | 27 | 21,8 | 70,3 | 48,5 | 2,37 | 0,28 | 36 | |
| Syloid ED 3 | 4 | 6,04 | 3,62 | 5,54 | 8,88 | 21 | 22,0 | 73,0 | 51,0 | 2,03 | 0,24 | 35 | 34 |

EP 0 922 671 B1

| Produkt hergestellt nach Beispiel | MM-Ein-waage | Teil-chen-größe d4,3 | Tei-chen-größe d10 | Teil-chen-größe d50 | Teil-chen-größe d90 | Grin-dome-ter | Glanz 60° | Glanz 85° | Sheen | Rau-heit RZD (A/M) | Rau-heit Ra (A/M) | Visko-sität | Schicht-dicke |
|---|---|---|---|---|---|---|---|---|---|---|---|---|---|
| | g | | µm | µm | µm | µm | | | | | | s | µm |
| | | | | | | | | | | | | | |
| Nipsil E 1009 | 4 | 7,92 | 4,34 | 6,97 | 12,51 | 27 | 22,0 | 70,0 | 48,0 | 2,44 | 0,28 | 38 | 32 |
| OK 607 | 4 | 4,60 | | 4,20 | | 18 | 22,5 | 78,5 | 56,0 | 1,70 | 0,20 | 35 | 32 |
| 2 + 3 | 4 | 6,84 | 3,95 | 6,26 | 10,10 | 22 | 22,9 | 74,6 | 51,7 | 2,20 | 0,27 | 35 | 39 |
| 2 | 4 | 12,47 | 4,03 | 7,17 | 29,37 | 27 | 23,1 | 74,1 | 51,0 | 2,08 | 0,26 | 34 | 41 |
| 1 | 4 | 8,34 | 4,48 | 7,03 | 12,89 | 23 | 23,8 | 72,0 | 48,2 | 2,27 | 0,27 | 36 | 30 |
| 1 | 4 | 10,10 | 5,03 | 7,80 | 14,71 | 23 | 24,1 | 70,7 | 46,6 | | | 36 | 30 |
| 1 | 4 | 8,52 | 4,84 | 7,57 | 12,94 | 23 | 24,4 | 71,0 | 46,6 | | | 38 | 30 |
| 1 | 4 | 9,34 | 4,52 | 8,03 | 13,87 | 28 | 24,7 | 67,9 | 43,2 | | | 34 | 28 |
| 1 + 3 | 4 | 7,42 | 4,24 | 6,82 | 11,07 | 24 | 25,0 | 73,0 | 48,0 | 2,13 | 0,26 | 38 | 34 |

Tabelle 8: Prüfungen im DD-Lack

Lacksystem: DD-Lack gemäß Rezeptur
Vergleichsprodukt: Syloid ED 3

| Produkt-Bez. | MM-Ein-waage g | Malvern-wert d4,3 µm | Teilchen-größe d10 µm | Teilchen-größe d50 µm | Teilchen-größe d90 µm | Grindo-meter (A/M) µm | Densito-meter-wert | Glanz 60° | Glanz 85° | Sheen | Rauheit RZD (A/M) | Rauheit Ra (A/M) | Viskosi-tät s | Schicht-dicke µm | Lack-system |
|---|---|---|---|---|---|---|---|---|---|---|---|---|---|---|---|
| 2b | 7,65 | 12,93 | 3,69 | 6,68 | 24,35 | 25 | 2,11 | 25,0 | 66,2 | 41,2 | 2,00 | 0,24 | n.m. | ca. 40 | DD |
| 2d | 8,00 | 12,22 | 5,76 | 11,53 | 19,50 | 40 | 2,16 | 24,7 | 40,3 | 15,6 | 4,30 | 0,55 | 32 | ca. 40 | DD |
| 3c | 8,2 | 7,42 | 4,24 | 6,82 | 11,07 | 22 | 2,12 | 25,0 | 65,6 | 40,6 | 2,13 | 0,26 | 53 | ca. 40 | DD |
| 2a | 8,24 | 6,49 | 3,74 | 5,95 | 9,70 | 24 | 2,11 | 24,5 | 59,7 | 35,2 | 2,24 | 0,28 | 55 | ca. 40 | DD |
| 1a | 8,41 | 8,34 | 4,48 | 7,03 | 12,89 | 25 | 2,08 | 25,0 | 60,9 | 35,9 | 2,27 | 0,27 | n.m. | ca. 40 | DD |
| Fällungskie-selsäure | 10,1 | 7,83 | 4,67 | 7,17 | 11,56 | 23 | 2,01 | 25,0 | 61,9 | 36,9 | 1,95 | 0,24 | 53 | ca. 40 | DD |
| Syloid ED 3 | 10,7 | 6,04 | 3,62 | 5,54 | 8,88 | 21 | 2,24 | 25,0 | 68,2 | 43,2 | 2,03 | 0,24 | 52 | ca. 40 | DD |

EP 0 922 671 B1

Tabelle 9: Prüfungen im DD-Lack

Lacksystem: DD-Lack gemäß Rezeptur
Vergleichsprodukt: Nipsil E 1009

EP 0 922 671 B1

| Produkt-Bez. | MM-Ein-waage g | Teilchen-größe d4,3 µm | Teilchen-größe d10 µm | Teilchen-größe d50 µm | Teilchen-größe d90 µm | Grindo-meter-wert µm | Densito-meter-wert | Glanz 60° | Glanz 85° | Sheen | Rauheit RZD (A/M) | Rauheit Ra (A/M) | Viskosi-tät s | Schicht-dicke µm | Lack-system |
|---|---|---|---|---|---|---|---|---|---|---|---|---|---|---|---|
| 2b | 7,65 | 12,93 | 3,69 | 6,68 | 24,35 | 25 | 2,11 | 25,0 | 66,2 | 41,2 | 2,00 | 0,24 | n.m. | ca. 40 | DD |
| 1a | 8,41 | 8,34 | 4,48 | 7,03 | 12,89 | 25 | 2,08 | 25,0 | 60,9 | 35,9 | 2,27 | 0,27 | n.m. | ca. 40 | DD |
| Nipsil E 1009 | 11,3 | 7,92 | 4,34 | 6,97 | 12,51 | 27 | 1,96 | 25,0 | 60,5 | 35,5 | 2,44 | 0,28 | 35 | ca. 40 | DD |

Tabelle 10: Prüfungen im Coil Coating Lack

Lacksystem: Coil Coating Lack gemäß Rezeptur

| Produkt hergestellt nach Beispiel | MM-Ein-waage | Teil-chen-größe d4,3 | Tei-chen-größe d10 | Teil-chen-größe d50 | Teil-chen-größe d90 | Grin-dome-ter | Glanz 60° | Glanz 85° | Sheen | Visko-sität |
|---|---|---|---|---|---|---|---|---|---|---|
| | g | µm | µm | µm | µm | µm | | | | s |
| | | | | | | | | | | |
| HK 125 | 2,7 | | 4,9 | 9,65 | 17,35 | 30 | 24,0 | 45,0 | 21,0 | 95 |
| Syloid C 812 | 2 | | 6,40 | 12,50 | 20,80 | 40 | 27,0 | 44,0 | 17,0 | 90 |
| 1 | 2 | 12,36 | 6,20 | 11,33 | 19,31 | 32 | 27,0 | 48,0 | 21,0 | 101 |
| 1 | 2 | 14,56 | 6,82 | 13,31 | 23,30 | 40 | 28,0 | 48,0 | 20,0 | 102 |
| Lovel HSF | 2 | | 6,74 | 13,22 | 22,96 | 44 | 29,0 | 42,0 | 13,0 | 77 |

EP 0 922 671 B1

Tabelle 11: Prüfungen in einer Acryl-Dispersion (wäßrig)

Lacksystem: Acrylat Dispersion (MB 2399-134), wäßrig, der Fa. Rohm und Haas
Vergleichsprodukt: AQ 75 N

| Produkt-bezeichnung | MM-Einwaage g | Grindometer μm | Densitometerwert | Glanz 60° | Glanz 85° | Sheen |
|---|---|---|---|---|---|---|
| TS 100 (Handelsprodukt der Degussa AG) | 0,25 | 41 | 2,5 | 69,3 | 92,3 | 23,0 |
| TS 100 (Handelsprodukt der Degussa AG) | 0,5 | 41 | 2,4 | 56,1 | 87,0 | 30,9 |
| TS 100 (Handelsprodukt der Degussa AG) | 0,75 | 41 | 2,28 | 44,7 | 82,0 | 37,3 |
| TS 100 (Handelsprodukt der Degussa AG) | 1 | 41 | 2,17 | 30,4 | 73,4 | 43,0 |
| Fällungskieselsäure gemäß Beispiel 1b | 1 | 29 | 2,09 | 31,3 | 53,8 | 22,5 |
| AQ 75 N (Handelsprodukt von Crosfield) | 1 | 28 | 1,95 | 39,0 | 68,2 | 29,2 |
| Fällungskieselsäure gemäß Beispiel 1b | 1,5 | 29 | 1,89 | 18,1 | 35,2 | 17,1 |
| TS 100 (Handelsprodukt der Degussa AG) | 1,5 | 41 | 1,82 | 18,7 | 59,5 | 40,8 |
| AQ 75 N (Handelsprodukt von Crosfield) | 1,5 | 28 | 1,91 | 31,9 | 61,0 | 29,1 |
| Fällungskieselsäure gemäß Beispiel 1b | 2 | 29 | 1,79 | 12,4 | 25,2 | 12,8 |
| TS 100 (Handelsprodukt der Degussa AG) | 2 | 41 | 1,8 | 15,3 | 66,0 | 50,7 |
| AQ 75 N (Handelsprodukt von Crosfield) | 2 | 28 | 1,89 | 27,7 | 53,3 | 25,6 |
| AQ 75 N (Handelsprodukt von Crosfield) | 2,5 | 28 | 1,87 | 21,3 | 51,5 | 30,2 |
| AQ 75 N (Handelsprodukt von Crosfield) | 4 | 28 | - | 12,2 | 35,8 | 23,6 |

Die Teilchengrößenbestimmung erfolgt mittels Laserstrahl-Diffraktometer der Fa. Malvern. Vor der Messung wird die Kieselsäure in Wasser unter Rühren und Ultraschall dispergiert, diese Kieselsäuredispersion wird danach mittels Pumpe in den Strahlengang (Küvette) des Meßgerätes umgepumpt.

Sheen ist die Differenz des Glanzgrades gemessen bei einem Winkel von 85° und des Glanzgrades gemessen bei einem Winkel von 60°.

Die Bestimmung der Viskosität erfolgt mittels 4mm-DIN-Becher. Gemessen wird die Auslaufzeit in Sekunden des Lackes gemäß DIN 53 211.

Es bedeuten:

| | |
|---|---|
| CC-Lack: | Coil Coating Lack |
| DD-Lack: | Desmodur Desmophen-Lack |
| | Desmodur: Härter auf Isocyanat-Basis |
| | Desmophen: Polyalkohol als Bindemittelkomponente |
| | Desmodur/Desmophen sind eingetragene |
| | Warenzeichen der Bayer AG |
| CAB | Celluloseacetobutyrat |
| A/M | Alkyd-Melamin Lack |

**Patentansprüche**

1. Fällungskieselsäure, **gekennzeichnet durch** die folgenden physikalisch-chemischen Parameter:

| | |
|---|---|
| BET-Oberfläche nach DIN 66131 $m^2/g$ | 400 - 600 |
| DBP-Zahl nach DIN 53601 g/100 g | 300 - 360 |
| Stampfgewicht nach DIN 53194 g/l | 70 - 140 |
| Grindometerwert nach ISO 1524 μm | 15 - 50 |
| Kornverteilungsindex I | < 1,0 |
| gemessen mit Malvern | |
| Kornverteilungsindex I = $\dfrac{d_{90}-d_{10}}{2d_{50}}$ | |

2. Verfahren zur Herstellung der Fällungskieselsäure mit den physikalisch-chemischen Daten

| | |
|---|---|
| BET-Oberfläche nach DIN 66131 $m^2/g$ | 400 - 600 |
| DBP-Zahl nach DIN 53601 g/100 g | 300 - 360 |
| Stampfgewicht nach DIN 53194 g/l | 70 - 140 |
| Grindometerwert nach ISO 1524 μm | 15 - 50 |
| Kornverteilungsindex I | < 1,0 |
| gemessen mit Malvern | |
| Kornverteilungsindex I = $\dfrac{d_{90}-d_{10}}{2d_{50}}$ | |

nach Anspruch 1, **dadurch gekennzeichnet, daß** man eine Fällungskieselsäure, welche die folgenden physikalisch-chemischen Kenndaten aufweist:

| | |
|---|---|
| BET-Oberfläche nach DIN 66131 $m^2/g$ | 400 - 600 |
| DBP-Zahl nach DIN 53601 g/100g | 340 - 380 |
| Stampfgewicht nach DIN 53194 g/l | 180 - 220 |
| "ALPINE-Siebrückstand" > 63 μm Gew.-% | 25- 60 |

mittels einer Sichtmühle oder einer Fließbett-Gegenstrahlmühle vermahlt.

3. Verwendung der Fällungskieselsäure gemäß Anspruch 1 als Mattierungsmittel in Lacksystemen.

**Claims**

1. A precipitated silica **characterized by** the following physico-chemical parameters:

| | |
|---|---|
| BET surface area to DIN 66131 m$^2$/g | 400 - 600 |
| DBP index to DIN 53601 g/100 g | 300 - 360 |
| Compacted density to DIN 53194 g/l | 70 - 140 |
| Grindometer value to ISO 1524 $\mu$m | 15 - 50 |
| Size distribution index I | < 1.0 |
| measured with Malvern | |
| Size distribution index I $= \dfrac{d_{90}\text{-}d_{10}}{2d_{50}}$ | |

2. A process for preparing precipitated silica having the following physico-chemical data:

| | |
|---|---|
| BET surface area to DIN 66131 m$^2$/g | 400 - 600 |
| DBP index to DIN 53601 g/100 g | 300 - 360 |
| Compacted density to DIN 53194 g/l | 70 - 140 |
| Grindometer value to ISO 1524 $\mu$m | 15 - 50 |
| Size distribution index I | < 1.0 |
| measured with Malvern | |
| Size distribution index I $= \dfrac{d_{90}\text{-}d_{10}}{2d_{50}}$ | |

according to claim 1, **characterized in that** a precipitated silica having the following physico-chemical data:

| | |
|---|---|
| BET surface area to DIN 66131 m$^2$/g | 400 - 600 |
| DBP index to DIN 53601 g/100 g | 340 - 380 |
| Compacted density to DIN 53194 g/l | 180 - 220 |
| "ALPINE" sieve residue > 63 $\mu$m wt. % | 25 - 60 |

is milled using a classifier mill or a fluidized-bed opposed-jet mill.

3. Use of precipitated silica according to claim 1 as a matting agent in a coating system.

**Revendications**

1. Silice de précipitation,
   **caractérisée par**

   les paramètres physico-chimiques suivants :

   - surface BET selon la norme DIN 66131 en m$^2$/g      400 - 600
   - indice DBP selon la norme DIN 53601 en g/ 100 g      300 - 360
   - poids tassé selon DIN 53194 en g/l      70 - 140
   - valeur de Grindomètre selon ISO 1524 en $\mu$m      15 - 50
   - indice de distribution des grains I      < 1,0 mesuré avec l'appareil Malvern, indice de distribution de grains
     I $= \dfrac{d_{90}\text{-}d_{10}}{2d_{50}}$

2. Procédé de production des silices de précipitation ayant les données physico-chimiques suivantes :

-   surface BET selon la norme DIN 66131 en m$^2$/g      400 - 600
-   indice DBP selon la norme DIN 53601 en g/100 g     300 - 360
-   poids tassé selon DIN 53194 en g/l     70 - 140
-   valeur de Grindomètre selon ISO 1524 en μm     15 - 50
-   indice de distribution des grains I     < 1,0 mesuré avec l'appareil Malvern indice de distribution de grains I
  $$= \frac{d_{90} - d_{10}}{2 d_{90}}$$
  selon la revendication 1,

**caractérisé en ce qu'**

on broie une silice de précipitation qui possède les caractéristiques physico-chimiques suivantes :

-   surface BET selon la norme DIN 66131 en m$^2$/g      400 - 600
-   indice DBP selon la norme DIN 53601 en g/ 100 g     340 - 380
-   poids tassé selon DIN 53194 en g/l     180 - 220
-   résidu au tamisage « Alpine » >63 μm en % en poids     25 - 60 à l'aide d'un broyeur à boulets pour séparation à l'air ou d'un broyeur à jets opposés en lit fluidisé.

3.   Utilisation de la silice de précipitation conformément à la revendication 1, comme agent de matité dans des systèmes de laque.

*Figur 1*

Beispiel 4a „Feinanteil"

Beispiel 2c

Beispiel 4a „Grobanteil"

%

Teilchendurchmesser (µm)

EP 0 922 671 B1

Figur 2